# EUROPEAN PATENT APPLICATION

(11) **EP 2 302 496 A1**
(43) Date of publication of application: **30.03.2011**
(21) Application number: 09169965.2
(22) Date of filing: 10.09.2009
(51) Int. Cl.: G06F 3/048

(54) **Dynamic sizing of identifier on a touch-sensitive display**

(71) Applicant: RESEARCH IN MOTION LIMITED, Waterloo, Ontario N2L 3W8 (CA)
(72) Inventor: Grenier, Steven Robert, Mississauga Ontario L4W 0B5 (CA); Ng, Oliver, Mississauga Ontario L4W 0B4 (CA)
(74) Representative: Fennell, Gareth Charles

(57) **Abstract**

An identifier is displayed on a touch-sensitive display of a portable electronic device. When the touch-sensitive display detects a touch, a size of a contact area is determined. The identifier displayed on the touch-sensitive display is dynamically sized based on the size of the contact area.

## Description

### Field of Technology

The present disclosure relates to portable electronic devices, including but not limited to portable electronic devices having touch screen displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities. These devices run on a wide variety of networks from data-only networks such as Mobitex^{®} and DataTAC^{®} networks to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display for input and output is particularly useful on such handheld devices, as such handheld devices are small and are therefore limited in space available for user input and output. Further, the screen content on touchscreen displays may be modified depending on the functions and operations being performed. These devices have a limited area for rendering content on the touch screen display and for rendering features or icons, for example, for user interaction. With continued demand for decreased size of portable electronic devices, touch screen displays continue to decrease in size.

Improvements in touch screen devices are therefore desirable.

### Brief Description of the Drawings

FIG. 1 is a block diagram of a portable electronic device in accordance with the disclosure.
FIG. 2 is a front view of the portable electronic device having a touch-sensitive display in accordance with the disclosure.
FIG. 3 illustrates a plurality of identifiers displayed on the touch-sensitive display in accordance with the disclosure.
FIG. 4, FIG. 5, FIG. 6, and FIG. 7 illustrate conditions in which one of the identifiers is enlarged on the touch-sensitive display in accordance with the disclosure.
FIG. 8 illustrates the plurality of identifiers having an enlarged size in accordance with the disclosure.
FIG. 9 illustrates a relationship between a contact area and an amount of enlargement of an identifier in accordance with the disclosure.
FIG. 10 illustrates a relationship between a pressure applied to the touch-sensitive display and an amount of enlargement in accordance with the disclosure.

### Detailed Description

The following describes a portable electronic device and a method for dynamically sizing an identifier displayed on a touch-sensitive display based on a determined size of a contact area of a touch. The dynamic sizing may be an enlargement of the identifier when a touch is located over the identifier. Alternatively, once the size of the contact area of the touch is determined, a number of identifiers may be simultaneously resized and the layout of the identifiers on the display may be potentially changed to better accommodate the operation of the device by a user.

An identifier is displayed on a touch-sensitive display of a portable electronic device. A size of a contact area is determined when a touch is detected on the touch-sensitive display. The identifier displayed on the touch-sensitive display is dynamically sized based on the size of the contact area.

Dynamically sizing the identifier may include enlarging the identifier from a first size to a second size when the touch is detected and hovers over a displayed area of the identifier.

When the identifier is located near a periphery of the touch-sensitive display, a center point of the enlarged identifier may be located away from the periphery.

Determining the size of the contact area may include measuring the size of the contact area.

Determining the size of the contact area may comprise analyzing a set of touch locations over a period of time to approximate the contact area.

When the identifier is dynamically sized, the identifier may be sized to have a portion of a displayed area of the identifier within the contact area and a portion of the displayed area of the identifier outside the contact area.

The touch-sensitive display may display a plurality of identifiers which are dynamically sized based on the size of the contact area.

Dynamic sizing may occur when the size of the contact area exceeds a threshold.

Determining the size of the contact area may include averaging a set of contact measurements collected over a period of time.

Determining the size of the contact area and dynamically sizing the identifier may be repeatedly performed.

The identifier may include an icon.

A computer readable medium may have stored instructions for execution by a processor of a portable electronic device that may cause the portable electronic device to implement any of the methods described herein.

A portable electronic device includes a touch-sensitive display, a sensor, and a microprocessor. The touch-sensitive display is configured to display an identifier. The sensor is configured to detect a touch on the touch-sensitive display. The microprocessor is configured to determine a size of a contact area of the touch and dynamically size the identifier displayed on the touch-sensitive display based on the size of the contact area.

The touch-sensitive display may be configured to display the identifier in an enlarged size when the touch is detected and the touch hovers over the displayed area of the identifier.

When the identifier is located near a periphery of the touch-sensitive display, a center point of the enlarged identifier may be located away from the periphery of the touch-sensitive display.

The sensor may be configured to measure the size of the contact area.

When the identifier is dynamically sized, the identifier may be sized to have a portion of a displayed area of the identifier within the contact area and a portion of the displayed area of the identifier outside the contact area.

The touch-sensitive display may be configured to display a plurality of identifiers. The touch-sensitive display may be configured to dynamically size the plurality of identifiers based on the size of the contact area.

The microprocessor may be configured to determine the size of the contact area by analyzing a set of touch locations over a period of time.

The microprocessor may be configured to continually determine the size of the contact area and instruct the touch-sensitive display to repeatedly dynamically size the identifier.

The disclosed method and portable electronic device dynamically size an identifier or identifiers on a touch-sensitive display for improved usability. Due to the small size of most touch-sensitive displays and the desire to place many identifiers on a single display, an identifier and/or surrounding identifiers may be obstructed when covered by a finger or other contact member. A situation may be created in which an undesired selection may be made, as the underlying identifier is not visible. The disclosed method and device provide dynamically-sized identifiers that are sized according to a determined contact area of a finger or other contact member. The identifiers may be appropriately sized on the touch-sensitive display, regardless of the characteristics of a contact member, e.g., the finger size of a user. In contrast to a system with a fixed amount of zoom or sizing, the portable electronic device may adapt to various contact areas, and thus different finger sizes. Different users having different finger sizes may comfortably operate the portable electronic device without the need to manually adjust a zoom on the identifiers through a utility menu or other action.

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities such as a handheld electronic game device, digital photograph album, digital camera, or other device.

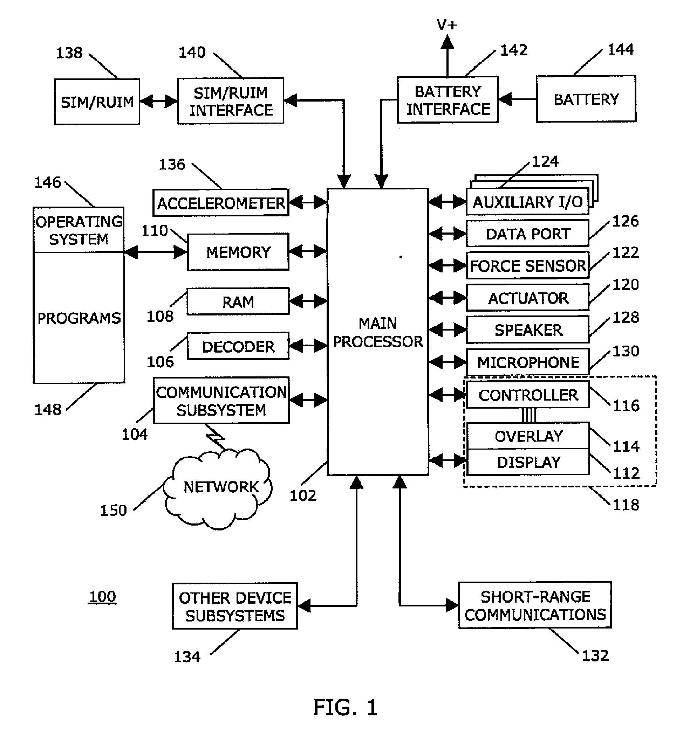

A block diagram of an example of an embodiment of a portable electronic device 100 is shown in FIG. 1. The portable electronic device 100 includes multiple components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, memory 110, a display 112 with a touch-sensitive overlay 114 connected to an electronic controller 116 that together comprise a touch-sensitive display 118 (also referred to in the art as a touch screen display), an actuator 120, one or more force sensors 122, an auxiliary input/output (I/O) subsystem 124, a data port 126, a speaker 128, a microphone 130, short-range communications 132 and other device subsystems 134. User-interaction with the graphical user interface is performed through the touch-sensitive overlay 114. Information, such as text, characters, symbols, images, icons, and other items that may be displayed on a portable electronic device, is displayed or rendered on the touch-sensitive display 118 via the processor 102.

When a touch is detected on the touch-sensitive display 118, x and y coordinates of the touch are determined, as known in the art, and the location of the touch may be associated with information displayed via a graphical user interface. Further information about a detected touch, such as a contact area of the touch or the pressure or force with which the touch is imparted on the touch-sensitive display 118, may be collected and provided to the processor 102. Reference to the contact area and the size of the contact area refer to the contact area and size of the contact area determined by the portable electronic device, and may not precisely reflect the area physically contacted by a contact member. A touch may comprise one or more various actions, including, but not limited to, one or more contacts, contact of or beyond a given pressure or other characteristic, contact including movement, contact over a period of time, and various combinations thereof.

The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into memory 110.

The portable electronic device 100 also includes an operating system 146 and software components 148 that are executed by the processor 102 and are typically stored in a persistent, updatable store such as the memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

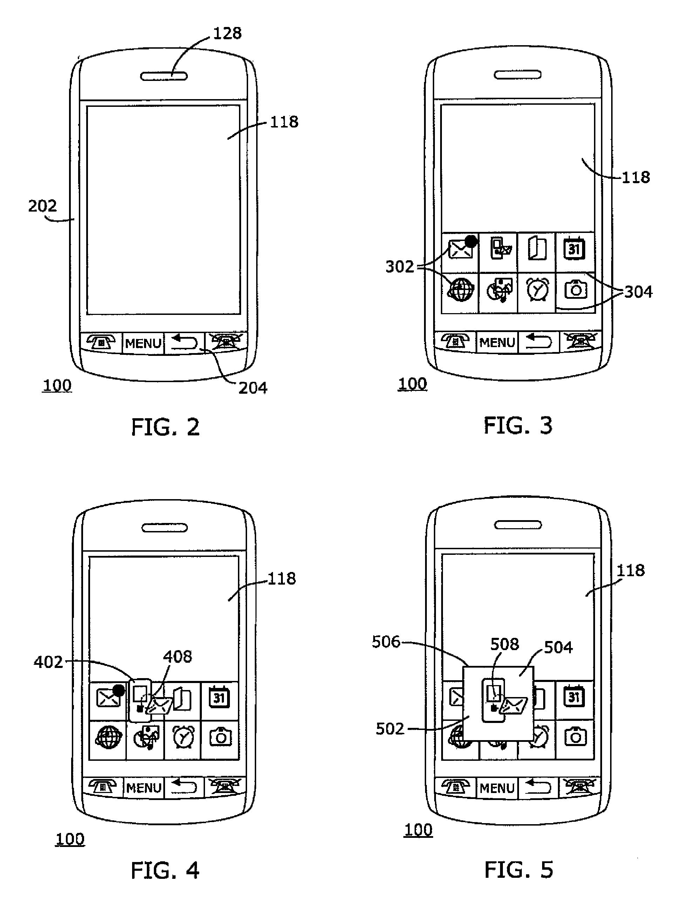

A front view of the portable electronic device 100 is shown in FIG. 2. The portable electronic device 100 includes a housing 202 that supports the touch-sensitive display 118, a set of mechanical buttons 204, and the speaker 128.

The portable electronic device 100 includes one or more sensors for detecting a touch by a contact member, such as a finger, thumb, stylus, or other suitable object on the touch-sensitive display 118. The sensor(s) may be located below the touch-sensitive overlay 114, around a periphery of the touch-sensitive display 118, and/or beneath a tray that supports the touch-sensitive display 118 in the form of piezoelectric sensors. Alternatively, the sensor(s) may be located in other places in the portable electronic device 100 or may be other types of sensor(s) depending on the particular type of touch-sensitive technology. The portable electronic device 100 may utilize any kind of touch-sensitive technology and its associated sensor(s) including resistive, surface acoustic wave, capacitive, infrared, strain gauge, optical imaging, dispersive signal technology, acoustic pulse recognition, and so forth.

When the contact member touches the touch-sensitive display 118, the sensor(s) detect a touch and a size of the contact area is determined. The manner of determining the size of the contact area may be direct when the touch-sensitive display 118 is capable of detecting a contact area and/or generating a signal or signals that the processor 102 may use to determine a contact area. Alternatively, the size of the contact area may be determined using less direct or inferential means when direct measurement of a contact area may not be available.

In the example of a portable electronic device 100 utilizing capacitive technology, multiple layers, including electrically-separated driving electrodes and sensing electrodes, are oriented in directions perpendicular to one another to form a grid. The drive electrodes carry a current and cross over the sensing electrodes. When a finger or other suitable contact member locally disrupts the capacitance over adjacent sensing electrodes, a touch is detected. By measuring and comparing the signals generated by the electrodes as a result of the change in capacitance, the processer 102 establishes coordinates and/or contact areas for a touch. Other technologies may be utilized to detect and/or measure/estimate an area of contact.

When the portable electronic device 100 in not capable of directly determining a contact area of a touch, the contact area may be approximated by indirect methods. For example, during a touch or over a series of touches, the portable electronic device 100 may utilize algorithms that determine the approximate size of a contact area based on a set of touch locations over a period of time during the use of the portable electronic device 100. The period of time may be as short as the duration of a single touch or may be a very long time, for example, when an ongoing process is utilized. Each touch location is associated with a single pair of x-y coordinates. Because the force applied by a non-moving contact member is rarely completely static, e.g., because a user may slightly roll their finger while making contact, the a single touch may be associated with a plurality of touch locations that vary over a period of time, including as short of a period of time as a single touch event. This variance may be analyzed to approximate the size of a contact area with the coordinates associated with multiple touch locations. The variance may be analyzed over a single touch event or multiple touch events. The portable electronic device 100 may optionally self-calibrate by prompting the user to perform a particular action, such as to roll a finger on the touch-sensitive display 118 similar to the motion made when taking a fingerprint. The device 100 may establish the approximate size of the contact area in other ways as well, such as through analysis of touch patterns or history of touches, or by prompting the user to perform a particular task or series of tasks on the touch-sensitive display 118. Such a process may be useful when the touch-sensitive display 118 resolves a touch location into a single pair of x-y coordinates for a touch, but may also be used when the touch-sensitive display 118 detects more than one simultaneous touch location.

The portable electronic device 100 may incorporate profile management for multiple users such that when the user changes, the size of the contact area may be adjusted. The change of a user may be automatically detected by the device 100 by identifying a change in touch patterns or through other identifiable touch characteristics collected during touch operation of the device 100. The user profile may also or alternatively be manually selected by the user.

A plurality of identifiers 302 are displayed on the touch-sensitive display 118 in FIG. 3. The identifiers 302 are shown as icons representing messaging, short message service (SMS), contacts, calendar, browser, media, clock, camera functions, or files. The identifiers 302 are shown displayed on a 4x2 grid with borders 304 in the form of grid lines that separate each of the identifiers 302 and better define the boundaries between the identifiers 302. The identifiers 302 may include one or more of an icon, a text label, a symbol, an image, and so forth. The identifiers 302 may include the graphical representation of the item itself or may also include an area surrounding the item, with or without borders 304.

Various other elements may also be displayed on the touch-sensitive display 118 including, but not limited to, the time, the date, the amount of battery charge remaining, the signal strength of a communications network, a new message count indicator, a voice message indicator, a speaker volume control, and so forth. Further, wallpaper may be displayed behind the identifiers 302 or other elements displayed on the touch-sensitive display 118. Transparency effects and so forth may be used to improve the overall aesthetic appeal of the displayed identifiers and elements.

After a touch is detected within the displayed area of one of the identifiers 302, the touch-sensitive display 118 displays an enlarged identifier based on the size of the contact area, as shown in FIG. 4 through FIG. 7. A phantom line indicates the determined contact area 408, 508, 608, 708 on the touch-sensitive display 118 in each of FIG. 4 through FIG. 7. As the size of the contact area increases, the amount of enlargement of the touched identifier may increase such that, regardless of the size of the contact area, at least a portion of the enlarged identifier underneath the contact member may continue to be visible.

During operation of the portable electronic device 100, a contact member contacts the touch-sensitive display 118 at a first contact pressure. Once a touch is detected by the touch-sensitive display 118, the sensor(s) and/or processor 102 determine the size of the contact area. The sensor(s) and/or processor 102 may repeatedly determine the size of the contact area as the contact member performs subsequent operations while remaining in contact with touch-sensitive display 118. Alternatively, the sensor(s) and/or processor 102 may calculate an average detected size of the contact area over a period of time.

Depending on the initial location of contact, the contact member may slide along the touch-sensitive display 118 to an identifier. At this point, the contact member may temporarily hover above the identifier. As used herein, the term "hover" refers to an event in which a touch is detected for a predetermined period of time at a location on the touch-sensitive display 118 and a contact pressure that facilitates sliding of the contact member without performing a selection. The contact member may perform an operation on the identifier, e.g., selecting the identifier by the application of sufficient pressure to the touch-sensitive display 118, a single or double touch of the touch-sensitive display 118, or other operation.

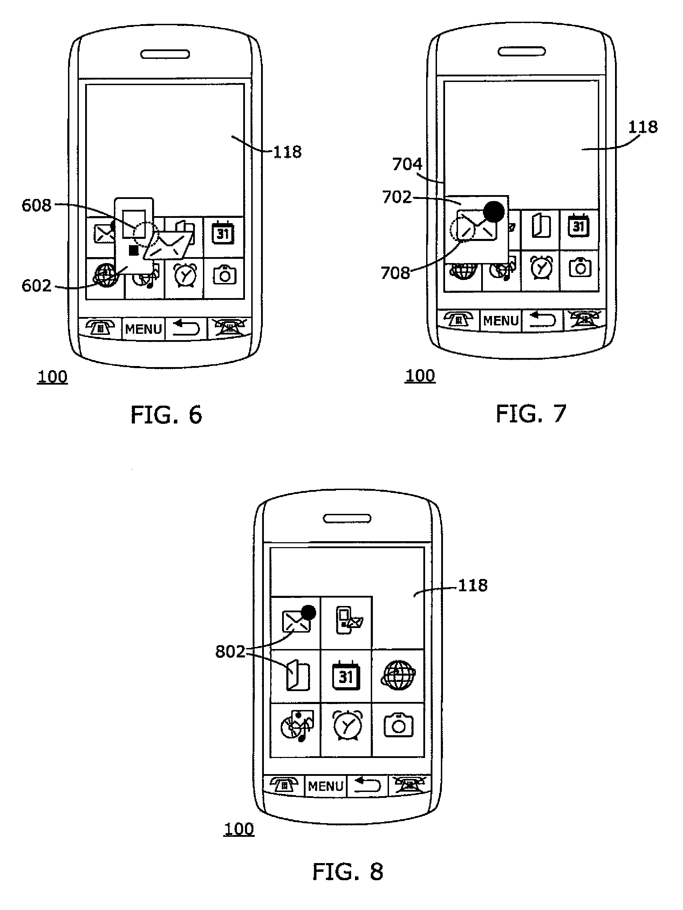

Either immediately or after a period of time of hovering above the identifier 302, the identifier 302 is dynamically sized from the size shown in FIG. 3 to the enlarged size of the identifier 402 shown in FIG. 4, the enlarged size of the identifier 502 as shown in FIG. 5, the enlarged size of the identifier 602 shown in FIG. 6, or the enlarged size of the identifier 702 shown in FIG. 7. The amount of enlargement and the manner in which the identifier 302 enlarges may vary in a number of ways.

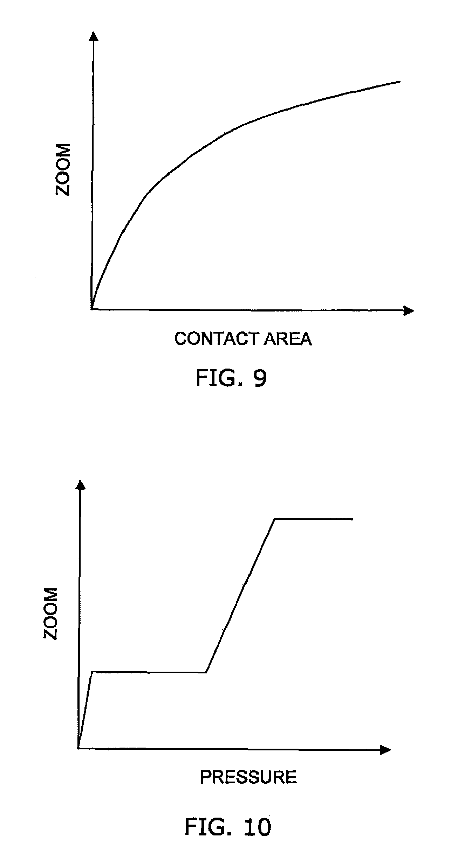

The amount of enlargement from the initial size, as shown in FIG. 3, to the enlarged size is based on the determined size of the contact area. The amount of enlargement (zoom) may be determined from the contact area and a predetermined relationship, such as shown in FIG. 9. Although a square root-type of dependency is shown in FIG. 9, other types of relationships may be utilized depending on the manner in which the sensor(s) and/or processor 102 determine the size of the contact area and the desired amount of enlargement or zoom for sizing the identifier.

Given the determined size of the contact area, an amount of enlargement of the identifier may be determined such that at least a part of the enlarged identifier is displayed outside of the contact area 408, 508, 608, 708. In this way, at least a part of the enlarged identifier remains visible despite the closeness of the contact member when the identifier is under hover.

The amount of enlargement of the identifier may also be, at least in part, a function of contact pressure. For example, as shown in FIG. 10, above initial contact within a range of low pressures through a first pressure threshold, a default amount of zoom is indicated by a first plateau. Above the first pressure threshold, the amount of zoom increases proportionally with contact pressure. Above a second pressure threshold, no further enlargement occurs. A limit on the amount of zoom may be implemented, at least in part, to prevent the application of too much pressure on the touch-sensitive display 118 and/or to limit the size of the enlarged icon. By providing such relationships between pressure and enlargement or zoom, a user may variably effectuate zooming, giving more control over the amount of enlargement.

This type of pressure-sizing sensitivity may be used separately or in conjunction with the dynamic sizing based on the size of the contact area. Improved control may be provided over the sizing in the event that sizing resulting from determined size of the contact area is not sufficient.

Two variations for the displayed enlargement of the identifier 302 are illustrated in FIG. 4 and FIG. 5 based on which graphical elements are included in the identifier 302. As shown in FIG. 4, when a touch associated with the identifier 302 is detected, the icon alone is enlarged to form the enlarged identifier 402. As shown in FIG. 5, the enlarged identifier 502 includes the icon, an area 504 surrounding the identifier 502, and a border 506. When the sensor(s) detect a touch associated with the identifier 302, the identifier 302 plus the surrounding area and the border 304 are increased in size to form the enlarged identifier 502. As shown, the determined size of the contact area 408, 508 is the same in FIG. 4 and FIG. 5, respectively.

Although FIG. 4 through FIG. 6 each show the location of the detected contact area in the center of the enlarged identifier 402, 502, 602, the location of the detected contact area may be in a corner, along an edge, or aligned with another part of the enlarged identifier 402, 502, 602. Alternatively, the enlarged area may be located at a corner, edge, or other part of the enlarged identifier 402, 502, 602. A touch anywhere in a displayed area of the identifier or in an area surrounding an identifier may also result in the enlargement of an identifier. As some detected contact areas of a particular touch may encroach on more than one identifier, the portable electronic device 100 may need to discern which of the identifiers to enlarge, whether multiple identifiers may be enlarged, and, when multiple identifiers are to be enlarged, what amount of zoom to apply to each of the identifiers.

The determined size of the contact area 408 in FIG. 4 is smaller than the determined size of the contact area 608 in FIG. 6. Accordingly, the identifier 602 of FIG. 6 is enlarged more than the identifier 402 of FIG. 4 is enlarged. Thus, a larger determined contact area typically results in greater enlargement of the identifier 302. As a result, the contact member should not obstruct the enlarged identifier 402, 502, 602.

FIG. 3 through FIG. 6 each show the identifiers enlarged about a center point of the identifier. When an enlarged identifier 702 is located near an outer periphery 704 of the touch-sensitive display 118, such as shown in FIG. 7, enlarging the identifier 702 about its center results in only part of the enlarged identifier 702 being displayed on the touch-sensitive display 118. Cropping the enlarged identifier 702 diminishes the benefit of dynamic sizing for identifiers displayed along the outer edge 704 of the touch-sensitive display 118. Thus, the enlarged identifier 702 may be offset from the outer edge 704 of the touch-sensitive display 118 or other boundaries or displayed information, such as an item displayed on the touch-sensitive display 118, which should not be covered in whole or in part. Such an offset facilitates display of the entire enlarged identifier 702 on the display 118.

When the contact member moves away from an enlarged identifier or, more specifically, moves away from the original displayed area of the corresponding identifier 302, the identifier 302 may return to its original or default size. When the contact member moves over another identifier, that identifier is enlarged based on the determined size of the contact area. Some delay may occur before enlarging or reducing the identifiers to provide smooth or more aesthetic display of the identifiers with distortion or other unpleasing visual effects.

Constant resizing of the identifiers may be distracting or annoying, particularly when the sensor(s) are sensitive and the amount of resizing fluctuates with minor variations in the determined contact area. Instead of constantly resizing the identifiers 302, the portable electronic device 100 may utilize an averaging process to smooth the rate of resizing. Alternatively, one or more threshold values may be utilized for the difference in size of contact areas at which resizing occurs.

Another form of dynamic sizing is shown in FIG. 8. Rather than enlarging only a single identifier in this example, when the portable electronic device 100 determines that a touch has a large contact area, all of the identifiers 802 are enlarged, and the layout of the identifiers 802 on the touch-sensitive display 118 is altered accordingly. As shown in FIG. 8, the identifiers 802 are arranged in three rows and three columns, instead of two rows and four columns as shown in FIG. 3. The layout may be modified in other ways, including altering the orientation of the identifiers on the touch-sensitive display 118. When the portable electronic device 100 detects a touch having a small contact area, the layout of the identifiers on the touch-sensitive display 118 may revert to a more compact layout, such as shown in FIG. 3. Although all of the identifiers are shown resized in FIG. 8, not all of the identifiers displayed on the touch-sensitive display 118 need to be resized. A group of identifiers that does not include all of the displayed identifiers may be resized.

Resizing of many or all identifiers 302 may occur when a contact area exceeds or is below a predetermined threshold level(s). The threshold for resizing the identifiers may be different for enlarging and for reducing, i.e., the thresholds may have built-in hysteresis. Having multiple thresholds prevents erratic resizing.

While the disclosure is described in the context of a portable electronic device, the concepts herein may be applied to stationary and/or fixed touch screen displays. In addition, the number of identifiers on the display screen may be altered as a function of the contact area. For instance, while eight identifiers are shown in FIG. 3, the number of identifiers may be reduced to six when a large contact area is determined. The two eliminated identifiers may be accessed in some other fashion, e.g., through a submenu, scrolling, and so forth. A relatively large display space above the identifiers may be maintained for display of other pertinent information on the touch-sensitive display 118.

Thus, a portable electronic device and method of dynamically resizing identifiers on a portable device are disclosed that provide improved usability. By dynamically resizing the identifiers, the touch-sensitive display is more easily read, particularly when the touch-sensitive display is small or includes a high density of displayed identifiers. Frustration that may occur when someone with large hands tries to operate a small touch device is reduced. Design of graphical user interfaces is more flexible with less need for concern about usability when many identifiers are in close proximity to one another.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
displaying an identifier (302) on a touch-sensitive display (118) of a portable electronic device (100);
determining a size of a contact area (408, 508, 608, 708) when a touch is detected on the touch-sensitive display (118);
dynamically sizing the identifier (302) displayed on the touch-sensitive display (118) based on the size of the contact area (408, 508, 608, 708).

2. The method of claim 1, wherein dynamically sizing comprises enlarging the identifier (302) from a first size to a second size when the touch is detected and hovers over a displayed area of the identifier (302).

3. The method of claim 1, wherein, when the identifier (302) is located near a periphery (704) of the touch-sensitive display(118), a center point of the enlarged identifier (302) is located away from the periphery (704).

4. The method of claim 1, wherein determining the size of the contact area (408, 508, 608, 708) comprises at least one of measuring the size of the contact area (408, 508, 608, 708), analyzing a set of touch locations over a period of time to approximate the contact area (408, 508, 608, 708), and averaging a set of contact measurements collected over a period of time.

5. The method of claim 1, wherein, when the identifier (302) is dynamically sized, the identifier (402, 502, 602, 702) is sized to have a portion of a displayed area of the identifier (302) within the contact area (408, 508, 608, 708) and a portion of the displayed area of the identifier (302) outside the contact area (408, 508, 608, 708).

6. The method of claim 1, wherein the touch-sensitive display (118) displays a plurality of identifiers (802) and wherein the plurality of identifiers (802) are dynamically sized based on the size of the contact area.

7. The method of claim 1, wherein dynamic sizing occurs when the size of the contact area (408, 508, 608, 708) exceeds a threshold.

8. The method of claim 1, wherein determining the size of the contact area (408, 508, 608, 708) and dynamically sizing the identifier (302) is repeatedly performed.

9. The method of claim 1, wherein the identifier (302) comprises an icon.

10. A computer readable medium having stored instructions executed by a processor (102) of a portable electronic device (100) and causing the portable electronic device (100) to implement the method of any of claims 1-9.

11. A portable electronic device (100) comprising:
a touch-sensitive display (118) configured to display an identifier (302);
a sensor configured to detect a touch on the touch-sensitive display (118);
a microprocessor (102) configured to determine a size of a contact area (408, 508, 608, 708) of the touch and dynamically size the identifier (302) displayed on the touch-sensitive display (118) based on the size of the contact area (408, 508, 608, 708).

12. The portable electronic device (100) of claim 11, wherein the touch-sensitive display (118) is configured to display the identifier (302) in an enlarged size when the touch is detected and the touch hovers over the displayed area of the identifier (302).

13. The portable electronic device (100) of claim 11, wherein, when the identifier (302) is dynamically sized, the identifier (302) is sized to have a portion of a displayed area of the identifier (302) within the contact area (408, 508, 608, 708) and a portion of the displayed area of the identifier (302) outside the contact area (408, 508, 608, 708).

14. The portable electronic device (100) of claim 11, wherein the touch-sensitive display (118) is configured to display a plurality of identifiers (802) and wherein the touch-sensitive display (118) is configured to dynamically size the plurality of identifiers (802) based on the size of the contact area.

15. The portable electronic device (100) of claim 11, wherein the microprocessor (102) is configured to do at least one of determine the size of the contact area (408, 508, 608, 708) by analyzing a set of touch locations over a period of time and continually determine the size of the contact area (408, 508, 608, 708) and instruct the touch-sensitive display (118) to repeatedly dynamically size the identifier (302).

## Amended claims

### Amended claims in accordance with Rule 137(2) EPC.

**1.** A method comprising:
displaying an identifier (302) on a touch-sensitive display (118) of a portable electronic device (100);
detecting a touch on the touch-sensitive display (118) associated with the identifier and determining a size of a contact area (408, 508, 608, 708) of the touch;
dynamically sizing the identifier (302) displayed on the touch-sensitive display (118) based on the size of the contact area (408, 508, 608, 708).

**2.** The method of claim 1, wherein dynamically sizing comprises enlarging the identifier (302) from a first size to a second size when the touch is detected and hovers over a displayed area of the identifier (302).

**3.** The method of claim 1, wherein, when the identifier (302) is located near a periphery (704) of the touch-sensitive display (118), a center point of the enlarged identifier (302) is located away from the periphery (704).

**4.** The method of claim 1, wherein determining the size of the contact area (408, 508, 608, 708) comprises at least one of measuring the size of the contact area (408, 508, 608, 708), analyzing a set of touch locations over a period of time to approximate the contact area (408, 508, 608, 708), and averaging a set of contact measurements collected over a period of time.

**5.** The method of claim 1, wherein, when the identifier (302) is dynamically sized, the identifier (402, 502, 602, 702) is sized to have a portion of a displayed area of the identifier (302) within the contact area (408, 508, 608, 708) and a portion of the displayed area of the identifier (302) outside the contact area (408, 508, 608, 708).

**6.** The method of claim 1, wherein the touch-sensitive display (118) displays a plurality of identifiers (802) and wherein the plurality of identifiers (802) are dynamically sized based on the size of the contact area and the positions of the identifiers (802) change.

**7.** The method of claim 1, wherein dynamic sizing comprises a first threshold for enlarging that is different than a second threshold for reducing.

**8.** The method of claim 1, wherein determining the size of the contact area (408, 508, 608, 708) and dynamically sizing the identifier (302) is repeatedly performed.

**9.** The method of claim 1, further comprising displaying a plurality of identifiers (302) and wherein dynamically resizing the identifier (302) includes enlarging a first identifier while retaining the size of the other identifiers.

**10.** A computer readable medium having stored instructions executed by a processor (102) of a portable electronic device (100) and causing the portable electronic device (100) to implement the method of any of claims 1-9.

**11.** A portable electronic device (100) comprising:
a touch-sensitive display (118) configured to display an identifier (302);
a sensor configured to detect a touch on the touch-sensitive display (118);
a microprocessor (102) configured to determine a size of a contact area (408, 508, 608, 708) of the touch and dynamically size the identifier (302) associated with the touch displayed on the touch-sensitive display (118) based on the size of the contact area (408, 508, 608, 708).

**12.** The portable electronic device (100) of claim 11, wherein the touch-sensitive display (118) is configured to display the identifier (302) in an enlarged size without performing a selection.

**13.** The portable electronic device (100) of claim 11, wherein, when the identifier (302) is dynamically sized, the identifier (302) is sized to have a portion of a displayed area of the identifier (302) within the contact area (408, 508, 608, 708) and a portion of the displayed area of the identifier (302) outside the contact area (408, 508, 608, 708).

**14.** The portable electronic device (100) of claim 11, wherein, when the touch is no longer associated with a first identifier, the first identifier is reduced in size.

**15.** The portable electronic device (100) of claim 11, wherein the microprocessor (102) is configured to do at least one of determine the size of the contact area (408, 508, 608, 708) by analyzing a set of touch locations over a period of time and continually determine the size of the contact area (408, 508, 608, 708) and instruct the touch-sensitive display (118) to repeatedly dynamically size the identifier (302).
